# EUROPÄISCHE PATENTSCHRIFT

(11) **EP 0 602 457 B1**
(45) Veröffentlichungstag und Bekanntmachung des Hinweises auf die Patenterteilung: **07.04.1999**
(21) Anmeldenummer: 93119382.5
(22) Anmeldetag: 01.12.1993
(51) Int. Cl.: H04Q 11/04, H04M 3/42, H04M 11/06

(54) **Verfahren zum Beeinflussen einer Signalisierungsprozedur mit Hilfe von Kommunikationsendgeräten eines Kommunikationssystems**
Method for modifying a signalling procedure by communication terminals of a communication system
Méthode de modification d'une procédure de signalisation par des terminaux de communication d'un système de communication

(30) Priorität: 18.12.1992 DE 4243074
(43) Veröffentlichungstag der Anmeldung: 22.06.1994
(73) Patentinhaber: SIEMENS AKTIENGESELLSCHAFT, 80333 München (DE)
(72) Erfinder: Kienberger, Helmut, Dipl.-Ing., D-81475 München (DE)

(56) Entgegenhaltungen:
- EP-A- 0 173 264
- EP-A- 0 365 200
- EP-A- 0 471 877
- DE-A- 3 825 898
- US-A- 4 908 853

## Beschreibung

Die Erfindung betrifft ein Verfahren gemäß Oberbegriff des Patentanspruchs 1.

Das Integrieren von ISDN-Funktionen in eine bereits vorhandene Netzumgebung bedeutet eine große Vielfalt an Funktionen in Peripherie und Steuerung. Unterschiedliche Gerätetypen und Netze für Sprach-, Text-, Daten- und Bildkommunikation erfordern verschiedene Schnittstellen, Signalisierungen, Übertragungsgeschwindigkeiten und Protokolle. Diese Funktionen sowie die Möglichkeit einer technologischen und funktionalen Inovation werden durch modulare Peripheriekonzepte zeitgemäßer ISDN-Kommunikationssysteme bereitgestellt. Die Systemsteuerung realisiert das Durchschalten sowie das Speichern und Verarbeiten von Informationen abhängig von der Anlagengröße mit einem einheitlichen modularen Prozessorkonzept.

Die Realisierung jener Funktionen und Leistungsmerkmale erfordern aber die Verwendung von Kommunikationsendgeräten, die analoge Kommunikationssysteme bis dahin nicht gekannt haben. Insbesondere der Einsatz von Hardkeygesteuerten Kommunikationsendgeräten erleichtert das Benutzen einer Vielzahl von im Kommunikationssystem ablaufenden Teilnehmrleistungsmerkmalen. Hardkey-Steuerung bedeutet dabei, daß Teilnehmerleistungsmerkmale am Kommunikationsendgerät durch Betätigen von zu diesem Zweck vorgesehenen Tasten entsprechend dem Teilnehmerwunsch aufgerufen werden können. Aus der Druckschrift "ISDN im Büro", Sonderausgabe Telcom Report und Siemens Magazin COM, 1985 sind derartige Kommunikationsendgeräte z.B. auf Seite 41 beschrieben. Dabei sind den am Kommunikationsendgerät angeordneten Hardkey-Tasten spezielle Teilnehmerleistungsmerkmale wie z.B. Wahlwiederholung, automatischer Rückruf, Gesprächsweitergabe usw. fest zugeordnet. Durch das Betätigen einer dieser Hardkey-Tasten wird also das entsprechende Teilnehmerleistungsmerkmal aufgerufen. Die feste Zuordnung wird dabei in der Regel vor Inbetriebnahme des Kommunikationssystems durchgeführt. Problematisch an einer derartigen Vorgehensweise ist jedoch, daß die Vielzahl der Teilnehmerleistungsmerkmale derart angewachsen ist, daß eine feste Zuordnung eines Teilnehmerleistungsmerkmals zu einer Hardkey-Taste eine unübersichtlich große Anzahl von Tasten bedeuten würde.

Der Erfindung liegt die Aufgabe zugrunde, eine Vielzahl von Teilnehmerleistungsmerkmalen einer überschaubaren Anzahl von Hardkey-Tasten zuzuordnen, um damit eine praktikable Einsatzweise des jeweiligen Kommunikationsendgerätes zu erreichen. Die Druckschrift EP-A-0 173 264 (Siemens) offenbart zwar eine gleiche Aufgabenstellung, bietet aber eine vollkommen andere Lösung.

Die Erfindung wird ausgehend vom Oberbegriff des Patentanspruchs 1 durch dessen kennzeichnende Merkmale gelöst.

Vorteilhaft an der Erfindung ist, daß die Tastenfunktionen von einer Anzeigesteuerprozedur auf eine Anzeigevorrichtung des Kommunikationsendgerätes als Menü gesteuert werden, wobei eine der Tastenfunktionen optisch markiert wird. Die Markierung ist dann in Abhängigkeit vom Betätigen einer am Kommunikationsendgerät angebrachten ersten und zweiten Navigationstaste im Uhrzeigersinn oder entgegengesetzt dem Uhrzeigersinn steuerbar. Soll ein gerade markiertes Teilnehmerleistungsmerkmal aktiviert werden, wird eine ebenfalls am Kommunikationsendgerät angebrachte Aktivierungstaste betätigt. Der Vorteil der Erfindung ist darin zu sehen, daß damit eine Vielzahl von Teilnehmerleistungsmerkmalen durch Betätigen einer einzigen Taste, nämlich der Aktivierungstaste, aktiviert werden können.

Gemäß Anspruch 2 ist vorgesehen, daß im statischen Tastenspeicher Kennzahlfunktionen abgespeichert sind. Damit ist der Vorteil verbunden, daß die beim Stand der Technik in umständlicher Weise einzugebenden Kennzahlfunktionen in praktikabler Weise abgerufen werden können.

Gemäß Anspruch 3 ist vorgesehen, daß auch mehrere Tastenmenüs, die in keinem logischen Zusammenhang untereinander stehen, über eine geeignete Bedienprozedur auf die Anzeigevorrichtung gebracht werden können. Vorgeschlagen wird die gleichzeitige Betätigung beider Navigationstasten und die anschließende Eingabe einer Ziffer (1 ... 9) zur Menüauswahl. Die Markierung und Aktivierung des gewünschten Teilnehmerleistungsmerkmals innerhalb eines jeden Menüs wird dann entsprechend der in Patentanspruch 1 vorgegebenen Vorgehensweise gesteuert.

Gemäß Anspruch 4 ist eine Anordnung zur Durchführung des Verfahrens vorgesehen. Dabei wird am Kommunikationsendgerät neben einigen wenigen Hardkeys und der für den Verbindungsaufbau zu anderen Kommunikationsendgeräten verantwortlichen Zifferntastatur die erste und zweite Navigationstaste sowie die Aktivierungstaste und eine Anzeigevorrichtung vorgesehen. Damit ist der Vorteil verbunden, daß das Kommunikationsendgerät eine überschaubare Anzahl von Tasten aufweist und somit in praktikabler Weise einsetzbar ist.

Im folgenden wird die Erfindung anhand eines Ausführungsbeispieles näher erläutert.

Es zeigen
- Fig. 1: das modulare Konzept des erfindungsgemäßen Verfahrens und
- Fig. 2: ein Flußdiagramm des erfindungsgemäßen Verfahrens.

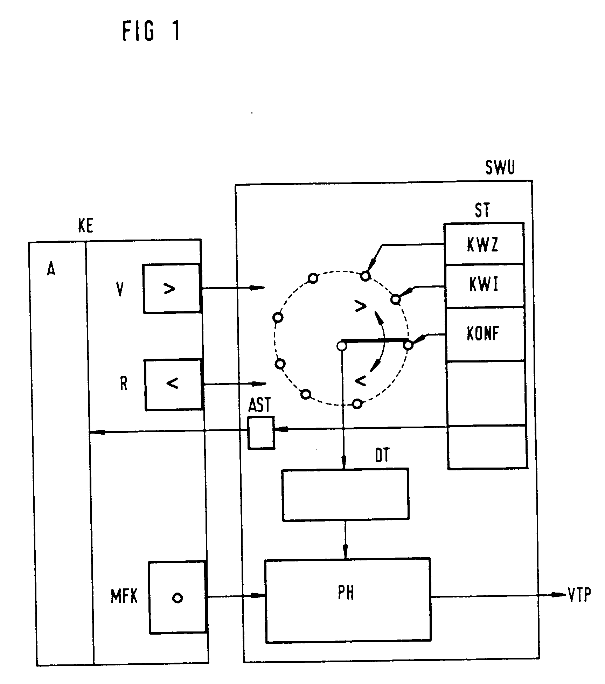

In Fig. 1 ist ein Kommunikationsendgerät KE aufgezeigt, an dem eine Anzeigevorrichtung A, eine Aktivierungstaste MFK sowie eine Navigationstaste V und eine Navigationstaste R vorgesehen sind. Weiterhin ist in Fig. 1 die Durchschalteeinheit SWU aufgezeigt. Hierin sind der statische Tastenspeicher ST und der dynamische Tastenspeicher DT vorgesehen. Im statischen Tastenspeicher ST sind die entsprechenden Tastenfunktionen abgespeichert. Dabei werden im Ausführungsbeispiel für Anwendungen in der Bundesrepublik Deutschland folgende Kurzzeichen für Tastfunktionen verwendet:
- KWZ: Kurzwahl zentral,
- KWI: Kurzwahl individuell,
- NV: Nonvoice,
- AUSG: Ausgabe,
- ANZU: Funktionanzeigeunterdrückung,
- UHR: Uhrzeit,
- TEIN: Termineinschalten,
- TAUS: Terminausschalten,
- KONF: Konferenz,
- ID: Identifizieren/Fangen,
- VMS: Voice mail
- PA: Parken

Weiterhin ist in der Durchschalteeinheit SWU eine Anzeigesteuerprozedur AST vorgesehen, die die Ansteuervorgänge auf der Anzeigevorrichtung A durchführt. Letztendlich ist ebenfalls in der Durchschalteeinheit SWU ein Protokoll-händler implementiert. Er dient zur Umsetzung des vom Kommunikationsendgerätes KE erhaltenen physikalischen Tastencodes in eine logische Tastenmeldung, die dann entsprechend bei Betätigen der Aktivierungstaste MFK zu den Prozessen der Vermittlungstechnik VTP weitergeleitet wird.

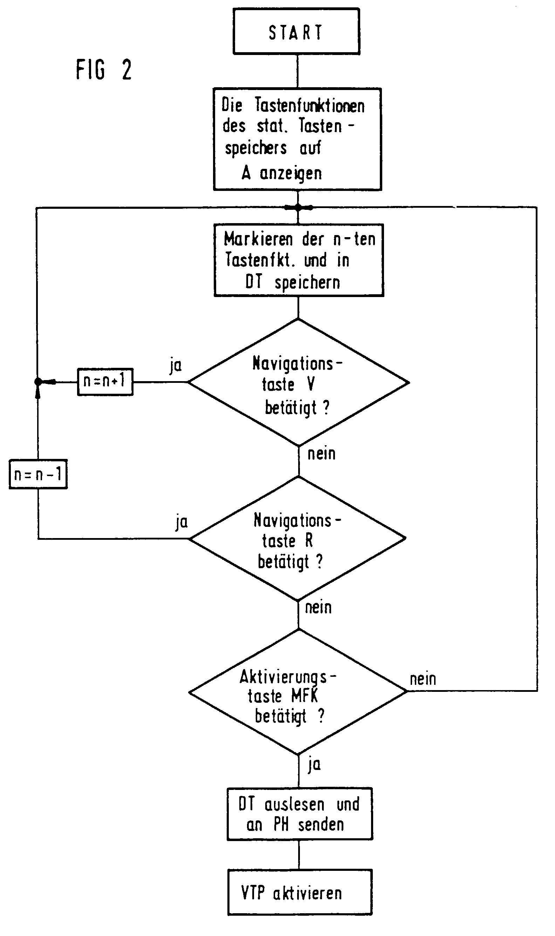

Im folgenden wird das erfindungsgemäße Verfahren in Fig. 2 anhand eines Flußdiagramms näher erläutert.

Die in dem statischen Tastenspeicher ST abgespeicherten Tastenfunktionen werden von der Anzeigesteuerprozedur AST auf der Anzeigevorrichtung A des Kommunikationsendgerätes KE gesteuert. Dabei wird eine der angezeigten Tastenfunktionen optisch markiert. Dies kann beispielsweise durch eine besondere optische Hervorhebung geschehen. Die Markierung ist weiterhin in Abhängigkeit vom Betätigen einer der beiden Navigationstasten im Uhrzeigersinn bzw. entgegengesetzt dem Uhrzeigersinn steuerbar. Sind beispielsweise alle im jeweiligen Menü möglichen Tastenfunktionen auf der Anzeigevorrichtung A dargestellt, so bedeutet das einmalige Betätigen der Navigationstaste V, daß die Markierung um jeweils eine Tastenfunktion in Vorwärtsrichtung gesteuert wird. Entsprechendes gilt für die Rückwärtsrichtung beim Betätigen der Navigationstaste R. Damit können alle auf der optischen Anzeigevorrichtung A dargestellten Tastenfunktionen in entsprechender Weise markiert werden. Im vorliegenden Ausführungsbeispiel soll das Teilnehmerleistungsmerkmal KONF aktiviert werden. Zu diesem Zweck muß durch Betätigen einer der beiden Navigationstasten V, R eine Markierung durchgeführt werden. Dabei wird jede markierte Tastenfunktion in den dynamischen Tastenspeicher DT gespeichert. Ist auf der Anzeigevorrichtung A die Tastenfunktion KONF markiert, dann wird am Kommunikationsendgerät KE die Aktivierungstaste MFK betätigt. Damit wird der Protokollhändler PH dazu veranlaßt, die im dynamischen Tastenspeicher DT abgespeicherte Tastenfunktion KONF abzurufen und in eine logische Tastenmeldung umzuwandeln. Das Resultat wird zu den vermittlungstechnischen Prozessen VTP der Durchschalteeinheit SWU gesendet. Dort werden dann die entsprechenden vermittlungstechnischen Prozeduren und Prozesse zur Durchführung der Teilnehmerfunktion KONF aktiviert.

## Patentansprüche

1. Verfahren zum Beeinflussen einer Signalisierungsprozedur mit Hilfe von Kommunikationsendgeräten (KE) eines Kommunikationssystems (KS), mit
Kommunikationsendgeräten (KE), die mit einer den Verbindungsaufbau zu anderen Kommunikationsendgeräten (KE) steuernden Zifferntastatur sowie Tasten (TH) zum Steuern von Teilnehmerleistungsmerkmalen versehen sind, und
mit einer im Kommunikationssystem (KS) angeordneten Durchschalteeinheit (SWU), in der vermittlungstechnische Prozesse (VTP) ablaufen,
**dadurch gekennzeichnet**,
daß die in einem statischen Tastenspeicher (ST) der Durchschalteeinheit (SWU) abgespeicherten Tastenfunktionen unter der Steuerung einer Anzeigesteuerprozedur (AST) auf einer Anzeigevorrichtung (A) des jeweiligen Kommunikationsendgerätes (KE) zur Anzeige gebracht und jeweils eine Tastenfunktion optisch markiert wird,
daß die optische Markierung in Abhängigkeit vom Betätigen einer an dem jeweiligen Kommunikationsendgerät (KE) angeordneten ersten Navigationstaste (V) auf der Anzeigevorrichtung (A) in Vorwärtsrichtung und in Abhängigkeit vom Betätigen einer an dem jeweiligen Kommunikationsendgerät (KE) angeordneten zweiten Navigationstaste (R) auf der Anzeigevorrichtung (A) in Rückwärtsrichtung steuerbar ist und die gerade markierte Tastenfunktion in einen dynamischen Tastenspeicher (DT) der Durchschalteeinheit (SWU) eingeschrieben wird und
daß durch Betätigen einer ebenfalls im jeweiligen Kommunikationsendgerät (KE) angeordneten Aktivierungstaste (MFK) der Inhalt des dynamischen Tastenspeichers (DT) einem Protokoll-Händler (PH) übergeben und den vermittlungstechnischen Prozessen (VTP) zugeführt wird,
die dann zur Durchführung des jeweiligen Teilnehmerleistungsmerkmale aktiviert werden.

2. Verfahren nach Anspruch 1,
**dadurch gekennzeichnet**,
daß im statischen Tastenspeicher (ST) Kennzahlfunktionen abgespeichert werden.

3. Verfahren nach Anspruch 1 oder 2,
**dadurch gekennzeichnet**,
daß mehrere Tastenmenüs, die in keinem logischen Zusammenhang untereinander stehen, durch gleichzeitiges Betätigen der ersten und zweiten Navigationstaste (V, R) und
anschließende Eingabe einer für das jeweilige Tastenmenü charakteristischen Ziffer auswählbar sind.

4. Anordnung zum Beeinflussen einer Signalisierungsprozedur mit Hilfe von Kommunikationsendgeräten (KE) eines Kommunikationssystems (KS), mit
Kommunikationsendgeräten (KE), die mit einer den Verbindungsaufbau zu anderen Kommunikationsendgeräten (KE) steuernden Zifferntastatur sowie Tasten zum Steuern von Teilnehmerleistungsmerkmalen versehen sind, und mit einer im Kommunikationssystem (KS) angeordneten Durchschalteeinheit (SWU), in der vermittlungstechnische Prozesse (VTP) ablaufen, zur Durchführung des Verfahrens nach Anspruch 1,
**dadurch gekennzeichnet,**
daß ein statistischer Tastenspeicher (ST) der Durchschalteeinheit (SWU) derart ausgebildet ist, daß hier abgespeicherte Tastenfunktionen unter der Steuerung einer Anzeige-Steuerprozedur (AST) auf einer Anzeigevorrichtung (A) des jeweiligen Kommunikationsendgerätes (KE) zur Anzeige gebracht und jeweils eine Tastenfunktion optisch markiert wird,
daß die Anzeigevorrichtung (A) derart ausgebildet ist, daß die optische Markierung in Abhängigkeit vom Betätigen einer dem jeweiligen Kommunikationsendgerät (KE) angeordneten ersten Navigationstaste (V) auf der Anzeigevorrichtung (A) in Vorwärtsrichtung und in Abhängigkeit vom Betätigen einer an dem jeweiligen Kommunikationsendgerät (KE) angeordneten zweiten Navigationstaste (R) auf der Anzeigevorrichtung (A) in Rückwärtsrichtung steuerbar ist und die gerade markierte Tastenfunktion in einen dynamischen Tastenspeicher (DT) der Durchschalteeinheit (SWU) eingeschrieben wird, und
daß die Kommunikationsendgeräte (KE) mit einer Aktivierungstaste (MFK) versehen sind, womit durch Betätigen derselben der Inhalt des dynamischen Tastenspeichers (DT) einem Protokoll-Handler (PH) übergeben und den vermittlungstechnischen Prozessen (VTP) zugeführt wird, die dann zur Durchführung des jeweiligen Teilnehmerleistungsmerkmals aktiviert werden.

## Claims

1. Method for modifying a signalling procedure with the aid of communications terminals (KE) of a communications system (KS), having communications terminals (KE) which are provided with a numerical keypad, which controls the connection set-up to other communications terminals (KE), and keys (TH) for controlling subscriber performance features, and having a switching unit (SWU), which is arranged in the communications system (KS) and in which switching processes (VTP) take place, characterized in that the key functions which are stored in a static key memory (ST) of the switching unit (SWU) are displayed, under the control of a display control procedure (AST), on a display device (A), and a key function is marked visually in each case, in that the visual marking can be controlled in the forward direction as a function of the activation of a first navigation key (V), arranged on the respective communications terminal (KE), on the display device (A), and in the reverse direction as a function of the activation of a second navigation key (R), arranged on the respective communications terminal (KE), on the display device (A), and the key function which has just been marked is written into a dynamic key memory (DT) of the switching unit (SWU), and in that, by activating an activation key (MFK) which is also arranged in the respective communications terminal (KE), the contents of the dynamic key memory (DT) are transferred to a protocol handler (PH) and are fed to the switching processes (VTP) which are then activated in order to carry out the respective subscriber performance features.

2. Method according to Claim 1, characterized in that code number functions are stored in the static key memory (ST).

3. Method according to Claim 1 or 2, characterized in that a plurality of key menus which do not have any logical relationship with one another can be selected by simultaneously activating the first and second navigation keys (V, R) and subsequently entering a number which is characteristic of the respective key menu.

4. Arrangement for modifying a signalling procedure with the aid of communications terminals (KE) of a communications system (KS), having communications terminals (KE) which are provided with a numerical keypad, which controls the connection set-up to other communications terminals (KE), and keys for controlling subscriber performance features, and having a switching unit (SWU), which is arranged in the communications system (KS) and in which switching processes (VTP) take place, for carrying out the method according to Claim 1, characterized in that a static key memory (ST) of the switching unit (SWU) is designed in such a way that key functions which are stored here are displayed, under the control of a display control procedure (AST), on a display device (A) of the respective communications terminal (KE) and in each case a key function is visually marked, in that the display device (A) is designed in such a way that the visual marking can be controlled in the forward direction as a function of the activation of a first navigation key (V), arranged on the respective communications terminal (KE), on the display device (A), and in the reverse direction as a function of the activation of a second navigation key (R), arranged on the respective communications terminal (KE), on the display device (A), and the key function which has just been marked is written into a dynamic key memory (DT) of the switching unit (SWU), and in that the communications terminals (KE) are provided with an activation key (MFK), by which means, by activating said key (MFK), the contents of the dynamic key memory (DT) are transferred to a protocol handler (PH) and are fed to the switching processes (VTP) which are then activated in order to carry out the respective subscriber performance feature.

## Revendications

1. Procédé pour influencer une procédure de signalisation à l'aide de terminaux (KE) de communication d'un système (KS) de communication, comportant des terminaux (KE) de communication qui sont munis d'un clavier de chiffres commandant l'établissement de liaison avec d'autres terminaux (KE) de communication, ainsi que de touches (TH) pour commander des facilités offertes aux usagers, et comportant une unité (SWU) d'interconnexion qui est montée dans le système (KS) de communication et dans laquelle se déroulent des processus (VTP) de la technique de commutation,
caractérisé
en ce que les fonctions de touche, mémorisées dans une mémoire (ST) statique de l'unité (SWU) d'interconnexion, sont, sous la commande d'une procédure (AST) de commande d'affichage, affichées sur un dispositif (A) d'affichage du terminal (KE) de communication associé et une fonction de touche est repérée visuellement,
en ce que le repérage visuel peut être commandé sur le dispositif (A) d'affichage vers l'avant suivant l'actionnement d'une première touche (V) de navigation disposée sur le terminal (KE) de communication associé et vers l'arrière sur le dispositif (A) d'affichage suivant l'actionnement d'une deuxième touche (R) de navigation disposée sur le terminal (KE) de communication associé et la fonction de touche justement repérée est décrite dans une mémoire (DT) dynamique de touche de l'unité (SWU) d'interconnexion et
en ce que, en actionnant une touche (MFK) d'activation disposée également dans le terminal (KE) de communication associé, le contenu de la mémoire (DT) dynamique de touche est transmis à un gestionnaire (PH) de protocole et envoyé aux processus (VTP) de la technique de commutation qui sont ensuite activés pour mettre en oeuvre la facilité associée offerte aux usagers.

2. Procédé suivant la revendication 1,
caractérisé
en ce que des fonctions de chiffre caractéristiques sont mémorisées dans la mémoire (ST) statique de touche.

3. Procédé suivant la revendication 1 ou 2,
caractérisé
en ce que plusieurs menus de touche, qui ne sont pas dans un rapport logique les uns avec les autres, peuvent être sélectionnés en actionnement en même temps la première et la deuxième touche (V, R) de navigation et en entrant ensuite un nombre caractéristique du menu de touche associé.

4. Dispositif pour influencer une procédure de signalisation à l'aide de terminaux (KE) de communication d'un système (KS) de communication comportant des terminaux (KE) de communication, qui sont munis d'un clavier de chiffre commandant l'établissement de liaison avec d'autres terminaux (KE) de communication, ainsi que des touches pour commander des facilités offertes aux usagers et comportant une unité (SWU) d'interconnexion qui est montée dans le système (KS) de communication et dans laquelle se déroulent des processus (VTP) de la technique de commutation, pour la mise en oeuvre du procédé suivant la revendication 1,
caractérisé
en ce qu'une mémoire (ST) statique de touche de l'unité (SWU) d'interconnexion est réalisée de telle manière que des fonctions de touche qui y sont mémorisées, sont, sous la commande d'une procédure (AST) d'affichage, affichées sur un dispositif (A) d'affichage du terminal (KE) de communication et une fonction de touche est repérée visuellement, en ce que le dispositif (A) d'affichage est réalisé de telle manière que le repérage visuel peut être commandé vers l'avant sur le dispositif (A) d'affichage suivant l'actionnement d'une première touche (V) de navigation disposée sur le terminal (KE) de communication associé et vers l'arrière sur le terminal (A) d'affichage suivant l'actionnement d'une deuxième touche (R) de navigation disposée sur le terminal (KE) de communication associé et la fonction de touche justement repérée est entrée dans une mémoire (DT) dynamique de touche de l'unité (SWU) d'interconnexion, et en ce que les terminaux (KE) de communication sont munis d'une touche (MFK) d'activation, ce par quoi, en actionnant cette touche d'activation, le contenu de la mémoire (DT) dynamique de touche est transmis au gestionnaire (PH) de protocole et envoyé aux processus (VTP) de la technique de commutation, qui sont alors activés pour la mise en oeuvre de la facilité associée offerte aux usagers.
